Europäisches Patentamt

European Patent Office

Office européen des brevets

(11) Veröffentlichungsnummer: **0 259 712**
**A2**

(12) # EUROPÄISCHE PATENTANMELDUNG

(21) Anmeldenummer: 87112500.1

(22) Anmeldetag: 27.08.87

(51) Int. Cl.⁴: **C09D 13/00**

---

(30) Priorität: 04.09.86 DE 3630201

(43) Veröffentlichungstag der Anmeldung:
16.03.88 Patentblatt 88/11

(84) Benannte Vertragsstaaten:
AT BE CH DE ES FR GB GR IT LI LU NL SE

(71) Anmelder: **Buchtal Gesellschaft mit beschränkter Haftung**
**Buchtalweg**
**D-8472 Schwarzenfeld(Opf.)(DE)**

(72) Erfinder: **Bard, Martin**
**Seminargasse 26**
**D-8450 Amberg(DE)**

(74) Vertreter: **Bockhorni, Josef, Dipl.-Ing. et al**
**Plinganserstrasse 18a Postfach 70 02 09**
**D-8000 München 70(DE)**

---

(54) **Verfahren zum Herstellen von Bleistiftminen und nach dem Verfahren hergestellte Bleistiftmine.**

(57) Die Erfindung beschäftigt sich mit der Herstellung von Bleistiftminen und offenbart auch eine nach dem vorgeschlagenen Verfahren hergestellte Bleistiftmine. Gemäß der Erfindung wird Graphit, Emailfritte und Quarzmehl, vorzugsweise wenigstens annähernd im Verim Verhältnis von einem Teil Graphit, zwei bis vier Teilen Emailfritte und eine Teil Quarzmehl zu dem Ausgangsgemisch verarbeitet, das dann zur Mine verpreßt, getrocknet und gebrannt wird. Mit der Erfindung ist es möglich, die Sinterung der Mischung unterhalb 550°C vorzunehmen und damit den Sinterungsbrand in normaler oxidierender Atmosphäre durchzuführen.

EP 0 259 712 A2

**Verfahren zum Herstellen von Bleistiftminen und nach dem Verfahren hergestellte Bleistiftmine.**

Die Erfindung bezieht sich auf die Herstellung von Bleistiftminen. Bleistiftminen werden aus einem Gemisch von Graphit und Ton hergestellt, wobei sich die Härte der Mine aus dem für dieses Gemisch gewählten Verhältnis von Graphit und Ton ergibt. Dieses Gemisch wird zur Mine gepreßt, die dann getrocknet und bei Temperaturen von 1000 bis 1100° C gebrannt wird. Dieses Verfahren ist jedoch nur durchführbar, wenn beim Brennen der gepreßten und getrockneten Minen im Brennofen eine Inertatmosphäre vorhanden ist, die wegen des Fehlens von Sauerstoff ein Verbrennen des Graphits bei den Brenntemperaturen verhindert. Zur Erzeugung und Aufrechterhaltung einer solchen Inertatmosphäre sind vergleichsweise aufwendige Vorrichtungen am und im Brennofen vorzusehen. Dieses Erfordernis in Verbindung mit den durch die hohe Sintertemperatur des Tones bedingten hohen Brenntemperaturen verteuert die Herstellungskosten erheblich.

Aufgabe der Erfindung ist es, ein Verfahren zur Herstellung von Bleistiftminen vorzuschlagen, mit dem es möglich ist, die Brenntemperaturn auf einen erheblich niedrigeren Wert und somit auch die Brennkosten entsprechend zu senken.

Diese Aufgabe wird gemäß der Erfindung dadurch gelöst, daß bei einem Verfahren zum Herstellen von Bleistiftminen, bei dem ein Gemisch aus Graphit und einem anorganischen sinterbaren Material zur Mine verpreßt, getrocknet und gebrannt wird, als sinter bares Material eine Mischung aus einer Emailfritte und Quarzmehl im Mischungsverhältnis von wenigstens annähernd einem Teil Graphit, zwei bis vier Teilen Emailfritte und einem Teil Quarzmehl Verwendung findet.

Unter einer Emailfritte versteht man eine vorgesinterte Masse, die nur teilweise vitrifiziert ist. Die gemäß der Erfindung verwendete Masse läßt sich ebenfalls verpressen, trocknen und brennen und bietet bei Auswahl einer geeigneten Fritte die Möglichkeit bis unterhalb einer Temperatur von 550 C die Minen zu sintern.

Es ist also in weiterer Ausbildung der Erfindung möglich, durch Einstellung des Emailfrittenanteils und/oder geeignete Wahl der Fritte die Sintertemperatur auf einen Wert von unterhalb 550 C zu halten, was in weiterer Ausbildung der Erfindung die Möglichkeit bietet, auf die Inertgasatmosphäre beim Brennen zu verzichten und stattdessen in einer normalen oxidierenden Atmosphäre zu brennen. Es hat sich gezeigt, daß, obwohl reiner Graphit bereits bei etwa oberhalb 490°C verbrennt, bei der vorgeschlagenen Masse ein solcher Verbrennungsvorgang bei etwas unterhalb 550°C noch nicht eintritt. Diese Temperatur entspricht aber einer Temperatur, die zur Sinterung, d. h. einer genügenden Verfestigung der Masse ausreicht.

Grundsätzlich liegt das Verhältnis der Gemischkomponenten, wie bereits angegeben, wenigstens annähernd bei einem Teil Graphit, zwei bis vier Teilen Emailfritte und einen Teil Quarzmehl. Durch Änderung dieses Verhältnisses innerhalb der angegebenen Grenzen und durch geeignete Wahl der eingesetzten Emailfritte ist zum einen die Einstellung der Brenntemperatur auf den gewünschten niedrigen Wert möglich, zum anderen aber auch die Einstellung der Härte der Bleistiftminen. Mit steigendem Frittenanteil ergibt sich eine Erhöhung der Härte in Richtung steigender Härte, wobei diese Einregelung problemlos vorgenommen werden kann. Vorzugsweise geht man dabei so vor, daß die Einstellung des zunehmenden Emailfrittenanteils durch Messung des mit der Zunahme dieses Anteiles zunehmenden ohmschen Widerstandes des Minenmaterials vorgenommen wird. Diese Möglichkeit ist gegeben, weil der elektrische Widerstand in nachvollziehbarer Weise aufgrund der physikalischen Eigenschaften der durch die Erfindung vorgeschlagenen Masse mit steigender Härte der Minen ebenfalls zunimmt.

Die beigefügte Skizze zeigt ein Ausführungsbeispiel einer solchen Mine, wobei durch die verschiedenen Punktierungen die entsprechenden Materialien innerhalb der Emailfritte angedeutet sind.

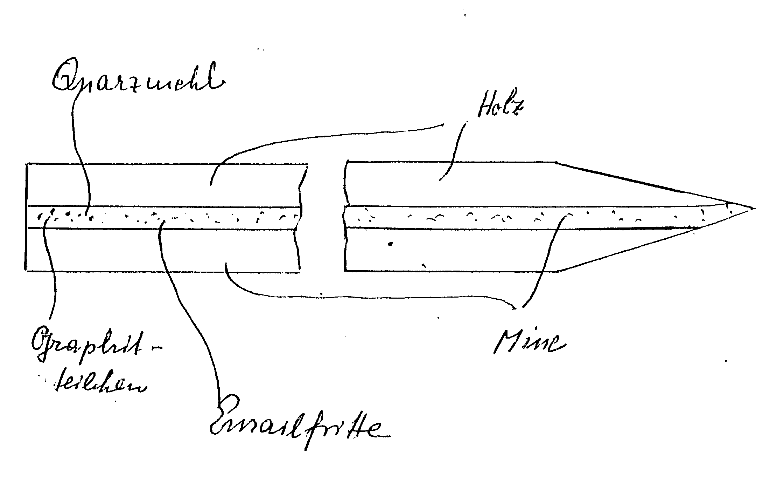

## Ansprüche

1. Verfahren zur Herstellung von Bleistiftminen, bei dem ein Gemisch aus Graphit und einem anorganischen sinterbaren Material zur Mine verpreßt, getrocknet und gebrannt wird,
dadurch **gekennzeichnet,**
daß als sinterbares Material eine Mischung aus einer Emailfritte und Quarzmehl im Mischungsverhältnis von wenigstens annähernd einem Teil Graphit, zwei bis vier Teilen Emailfritte und einem Teil Quarzmehl Verwendung findet.

2. Verfahren nach Anspruch 1,
dadurch **gekennzeichnet,**
daß der Emailfrittenanteil so eingestellt oder die Emailfritte so gewählt wird, daß die Sinterung der Mischung unterhalb 550 C eintritt.

3. Verfahren nach Anspruch 2,
dadurch **gekennzeichnet,**
daß der Sinterbrand in oxidierender Atmosphäre durchgeführt wird.

4. Verfahren nach einem oder mehreren der Ansprüche 1 bis 3,
dadurch **gekennzeichnet,**
daß die Einstellung der Minenhärte in Richtung zunehmender Härte durch Erhöhung des Emailfrittenanteils eingestellt wird.

5. Verfahren nach Anspruch 4,
dadurch **gekennzeichnet,**
daß die Einstellung zunehmenden Emailfrittenanteils durch Messung des mit der Zunahme dieses Anteils zunehmenden ohmschen Widerstandes des Minenmaterials vorgenommen wird.

6. Insbesondere nach dem Verfahren nach einem oder mehreren der vorhergehenden Ansprüche hergestellte Bleistiftmine, bestehend aus einem gespreßten, getrockneten und gebrannten Gemisch aus Graphit, einer Emailfritte und Quarzmehl, im wesentlichen im Verhältnis von einem Teil Graphit, zwei bis vier Teilen Emailfritte und einem Teil Quarzmehl.

Quarzmehl

Holz

Graphitteilchen

Emailfritte

Mine

0 259 712